# EUROPEAN PATENT APPLICATION

(11) **EP 4 807 596 A1**
(43) Date of publication of application: **16.09.2026**
(21) Application number: 24889188.9
(22) Date of filing: 08.11.2024
(51) Int. Cl.: G06F 21/55, G06F 1/26, H04L 9/40, H04L 43/02, H04L 61/5007, G06F 30/20, G06F 30/15

(54) **AUTOMATIC SCANNING TEST EQUIPMENT FOR SHIP'S CYBERSECURITY**

(30) Priority: 10.11.2023 KR 20230155707
(71) Applicant: Hanwha Ocean Co., Ltd., Geoje-si, Gyeongsangnam-do 53302 (KR); Cytur Inc., Seoul 08511 (KR)
(72) Inventor: BAE, Yang Sop, Seoul 06082 (KR); KIM, Byung Chul, Geoje-si, Gyeongsangnam-do 53243 (KR); YOON, Seul Gl, Goyang-si, Gyeonggi-do 10448 (KR); JO, Yong Hyun, Seoul 08511 (KR); LIM, Hyo Seok, Seoul 08511 (KR)
(74) Representative: Cabinet Beau de Loménie
(86) International application number: PCT/KR2024/017665
(87) International publication number: WO 2025/101002

(57) **Abstract**

Automatic scanning test equipment for maritime cybersecurity is disclosed. The automatic scanning test equipment is capable of performing automated cybersecurity inspection on behalf of a human operator.

## Description

### [Technical Field]

The present invention relates to automatic scanning test equipment for maritime cybersecurity and, more particularly, to automatic scanning test equipment for maritime cybersecurity, which can perform automated cybersecurity inspection on behalf of a human operator.

### [Background Art]

Recently, development of smart ships, such as autonomous ships adopting information technology (IT) and operational technology (OT), has been accelerating. Accordingly, application of interior/exterior communication technologies for ships has been actively underway, which has led to a surge in demand for robust cybersecurity. For example, enhanced security measures are required to mitigate the risk of cyberattacks that could disrupt normal operation or navigation of ships, potentially resulting in substantial casualties or property loss.

In response, the International Maritime Organization (IMO), an international organization established to address international issues related to shipping and shipbuilding, has been enforcing regulations on cybersecurity risk management.

However, the shipbuilding and offshore industry is still struggling to establish robust technologies or systems to defend ship-integrated systems against cyber threats such as malware.

In addition, while cybersecurity testing is mandatory during a sea trial phase, practical challenges persist due to environmental constraints during sea trials, such as power outages, safety concerns regarding embarking/disembarking, and high costs associated with deploying security experts.

Moreover, there have been problems in that personnel cannot always access a ship during sea trials, and safety issues and excessive costs arise due to long-term boarding tests by security experts during offshore testing.

The related art is disclosed in Korean Patent Registration No. 10-2498357 (February 10, 2023).

### [Disclosure]

### [Technical Problem]

It is an aspect of the present invention to provide portable, automatic scanning test equipment for maritime cybersecurity, which integrates software (SW) and hardware (HW) to automatically perform maritime cybersecurity inspections without relying on conventional human-led maritime cybersecurity testing methods.

### [Technical Solution]

In accordance with one aspect of the present invention, automatic scanning test equipment for maritime cybersecurity includes: an uninterruptible power supply allowing the automatic scanning test equipment to continue to operate in a power-off situation during sea trials; a keypad configured to input instructions to the automatic scanning test equipment; a display unit configured to display processes performed by the automatic scanning test equipment; and an automated system configured to collect onboard network information and automatically perform cybersecurity testing, wherein the automated system includes: a network information collection unit connected to an onboard network to collect network information; a storage unit storing the network information collected by the network information collection unit; a cybersecurity testing unit configured to perform cybersecurity testing on the network information stored in the network information collection unit or the storage unit to automatically identify network threat information; and at least one processor connected to the network information collection unit, the storage unit, and the cybersecurity testing unit.

In addition, upon collection of the network information by the network information collection unit, the cybersecurity testing unit of the automated system may automatically perform Internet Protocol (IP) and port scanning on the onboard network based on the network information and may store logs through network packet capture to perform cybersecurity testing.

In addition, the cybersecurity testing unit of the automated system may be configured to: perform ship commissioning to verify design of various devices and systems incorporated into a ship during an overall construction process; and perform asset inspections and scans for a computer-based system (CBS) of the ship.

In addition, the automatic scanning test equipment may transmit the stored logs to shore upon performance of cybersecurity testing by the cybersecurity testing unit of the automated system.

In addition, the automatic scanning test equipment may be portable for deployment in a key zone during sea trials to automatically perform cybersecurity testing.

### [Advantageous Effects]

Embodiments of the present invention provide automatic scanning test equipment for maritime cybersecurity, which can automatically perform cybersecurity testing and collection of onboard network threat information on behalf of a human operator and can eliminate the need for additional laptops, inspection equipment, and software setups by integrating software and hardware into a unified system, thereby reducing operational costs and significantly simplifying an overall testing process.

In addition, with an uninterruptible power supply (UPS) mounted therein, the automatic scanning test equipment according to the present invention can continue to operate even in a power-off situation during sea trials, thereby ensuring uninterrupted testing operations.

Furthermore, the automatic scanning test equipment according to the present invention may be portable for deployment in a key zone during sea trials to conduct automated cybersecurity testing and may perform automated log storage and transmission for analysis on shore to enable testing operations in consideration of sea trial environments.

### [Description of Drawings]

FIG. 1 is a block diagram illustrating a configuration of automatic scanning test equipment for maritime cybersecurity according to the present invention.
FIG. 2 is a diagram illustrating operations for cybersecurity testing performed by an automated system of the automatic scanning test equipment for maritime cybersecurity according to the present invention.
FIG. 3 is a schematic view of the automatic scanning test equipment for maritime cybersecurity according to the present invention.

### [Best Mode]

The above and other aspects, features, and advantages of the present invention will become apparent from the detailed description of the following embodiments in conjunction with the accompanying drawings.

The terminology used herein is for the purpose of describing particular embodiments and is not intended to be limiting. As used herein, the terms "comprises," "comprising," "includes," and/or "including," when used in this specification, specify the presence of stated features, integers, steps, operations, elements, components, and/or groups thereof, but do not preclude the presence or addition of one or more other features, integers, steps, operations, elements, components, and/or groups thereof. Further, as used herein, the singular forms "a", "an" and "the" are intended to include the plural forms as well, unless the context clearly indicates otherwise.

Hereinafter, exemplary embodiments of the present invention will be described in detail with reference to the accompanying drawings. It should be understood that the embodiments are provided for complete disclosure and thorough understanding of the present invention by those skilled in the art and that the present invention is not limited to the following embodiments and may be embodied in different ways by those skilled in the art.

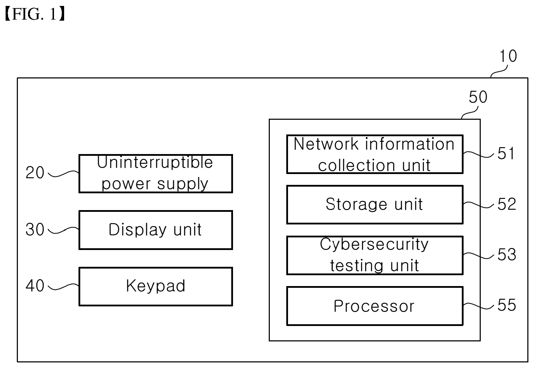

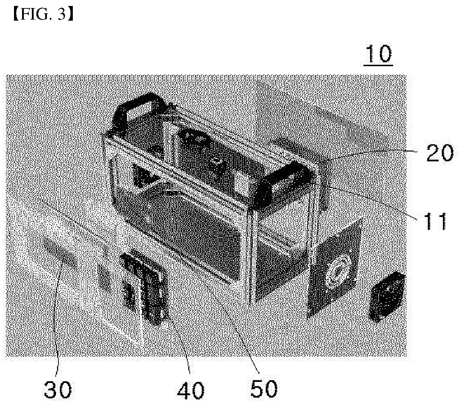

Referring to FIG. 1 to FIG. 3, automatic scanning test equipment 10 for maritime cybersecurity according to the present invention includes: an automated system 50 configured to collect onboard network information and automatically perform cybersecurity testing; an uninterruptible power supply 20 allowing the automatic scanning test equipment to continue to operate in a power-off situation during sea trials; a keypad 40 configured to input instructions to the automatic scanning test equipment; and a display unit 30 configured to display processes performed by the automatic scanning test equipment.

In addition, the automated system 50 may include: a network information collection unit 51 connected to an onboard network to collect network information; a storage unit 52 storing the network information collected by the network information collection unit 51; a cybersecurity testing unit 53 configured to perform cybersecurity testing on the network information stored in the network information collection unit 51 or the storage unit 52 to automatically identify network threat information; and at least one processor 55 connected to the network information collection unit, the storage unit, and the cybersecurity testing unit.

The processor 55 may be configured to control the network information collection unit 51, the storage unit 52, and the cybersecurity testing unit 53 connected thereto.

In addition, the automatic scanning test equipment 10 may be provided with a handle 11 to be portable for deployment in a key zone during sea trials to perform cybersecurity testing.

With the uninterruptible power supply (UPS) system, the automatic scanning test equipment 10 can continue to operate even in a power-off situation during sea trials to perform cybersecurity testing.

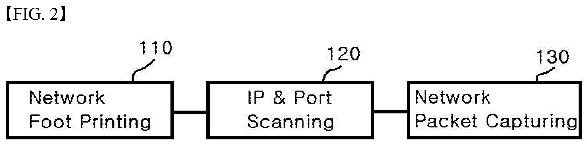

In addition, referring to in FIG. 2, the automated system 50 may perform network footprinting 110, IP and port scanning 120, and network packet capture 130.

That is, upon collection of the network information by the network collection unit 51, the cybersecurity testing unit 53 of the automated system 50 may automatically perform Internet Protocol (IP) and port scanning on the onboard network based on the network information and may store logs through network packet capture to perform cybersecurity testing.

The network information collection unit 51 may identify server OS information, web server information, IP information, and the like through network footprinting and may collect network history information.

In addition, the cybersecurity testing unit 53 may perform Internet Protocol (IP) and port scanning and may store logs through network packet capture to perform cybersecurity testing.

Here, the stored logs may be transmitted to shore for analysis on shore. The automated system may be configured to automatically transmit the logs to shore immediately upon storage of the logs.

In addition, the cybersecurity testing unit 53 may perform ship commissioning to verify the design of various devices and systems incorporated into a ship during an overall construction process and may perform asset inspections and scans for a computer-based system (CBS) of the ship.

Thus, the automatic scanning test equipment according to the present invention can automate cybersecurity testing and collection of onboard network threat information, which are tasks previously handled manually by commissioning personnel, and can eliminate the need for additional laptops, inspection equipment, and software setups by integrating software and hardware into a unified system, thereby reducing operational costs and significantly simplifying the overall testing process.

In addition, with the uninterruptible power supply (UPS) system mounted therein, the automatic scanning test equipment according to the present invention can continue to operate even in a power-off situation during sea trials, thereby ensuring uninterrupted testing operations.

In addition, the automatic scanning test equipment according to the present invention may be configured to be portable for deployment in key zones during sea trials to perform automated cybersecurity testing, thereby addressing the challenges of conventional methods, which were highly time-consuming and costly when applied to the entire ship. Furthermore, the automatic scanning test equipment according to the present invention may be configured to perform automated log storage and transmission for analysis on shore to enable testing operations in consideration of sea trial environments, thereby shortening the time required for ship construction.

Embodiments of the present invention described above may be implemented in the form of program instructions executable by various computer components and recorded on a computer-readable recording medium. The computer-readable recording medium may include program instructions, a data file, a data structure, and the like, solely or in combination. The program instructions recorded on the computer-readable recording medium may be specially designed and constructed for the present invention or may be those known and available to those skilled in the art of computer software. Examples of the computer-readable medium include a hardware device specifically configured to store and execute the program instructions, including: magnetic media, such as hard disks, floppy disks, and magnetic tape; optical recording media, such as CD-ROMs and DVDs; magneto-optical media, such as floptical disks; ROMs; RAMs; and flash memories. Examples of the program commands include not only machine language code generated by a compiler, but also high-level language code executable on a computer using an interpreter or the like. The hardware device may be configured to operate as one or more software modules to perform the operations according to the present invention, or vice versa.

Although some embodiments have been described herein, it should be understood that these embodiments are provided for illustration only and are not to be construed in any way as limiting the present invention, and that various modifications and changes can be made by those skilled in the art without departing from the spirit and scope of the invention. Therefore, the accompanying claims and their equivalents are intended to cover such changes or modifications as would fall within the scope and spirit of the present invention.

### [List of Reference numerals]

10: Automatic scanning test equipment for maritime cybersecurity
11: Handle
20: Uninterruptible power supply
30: Display unit
40: Keypad
50: Automated system
51: Network information collection unit
52: Storage unit
53: Cybersecurity testing unit
55: Processor

## Claims

1. Automatic scanning test equipment for maritime cybersecurity, comprising:
an uninterruptible power supply allowing the automatic scanning test equipment to continue to operate in a power-off situation during sea trials;
a keypad configured to input instructions to the automatic scanning test equipment;
a display unit configured to display processes performed by the automatic scanning test equipment; and
an automated system configured to collect onboard network information and automatically perform cybersecurity testing,
wherein the automated system comprises:
a network information collection unit connected to an onboard network to collect network information;
a storage unit storing the network information collected by the network information collection unit;
a cybersecurity testing unit configured to perform cybersecurity testing on the network information stored in the network information collection unit or the storage unit to automatically identify network threat information; and
at least one processor connected to the network information collection unit, the storage unit, and the cybersecurity testing unit.

2. The automatic scanning test equipment according to claim 1, wherein, upon collection of the network information by the network information collection unit, the cybersecurity testing unit of the automated system automatically performs Internet Protocol (IP) and port scanning on the onboard network based on the network information and stores logs through network packet capture to perform cybersecurity testing.

3. The automatic scanning test equipment according to claim 1, wherein the cybersecurity testing unit of the automated system is configured to:
perform ship commissioning to verify design of various devices and systems incorporated into a ship during an overall construction process; and
perform asset inspections and scans for a computer-based system (CBS) of the ship.

4. The automatic scanning test equipment according to claim 2, wherein the automatic scanning test equipment transmits the stored logs to shore upon performance of cybersecurity testing by the cybersecurity testing unit of the automated system.

5. The automatic scanning test equipment according to claim 1, wherein the automatic scanning test equipment is portable for deployment in a key zone during sea trials to automatically perform cybersecurity testing.
